# EUROPEAN PATENT SPECIFICATION

(11) **EP 3 231 746 B1**
(45) Date of publication and mention of the grant of the patent: **28.09.2022**
(21) Application number: 15866435.9
(22) Date of filing: 11.12.2015
(51) Int. Cl.: B65G 53/46

(54) **BUTTERFLY VALVE, STERILE POWDER DELIVERY APPARATUS CONSISTING OF A PLURALITY OF BUTTERFLY VALVES, AND METHOD FOR USE THEREOF**
DROSSELVENTIL, STERILE PULVERZUFUHRVORRICHTUNG AUS MEHREREN DROSSELVENTILEN UND VERFAHREN ZUR VERWENDUNG DAVON
VANNE PAPILLON, APPAREIL DE DISTRIBUTION DE POUDRE STÉRILE CONSTITUÉ D'UNE PLURALITÉ DE VANNES PAPILLONS, ET SON PROCÉDÉ D'UTILISATION

(30) Priority: 11.12.2014 CN 201410763540
(43) Date of publication of application: 18.10.2017
(73) Proprietor: ZHEJIANG NOVUS PHARMACEUTICALS CO., LTD., Shaoxing Zhejiang 312366 (CN)
(72) Inventor: ZHAO, Junxing, Xinchang Zhejiang 312500 (CN); WANG, Xiaoyong, Xinchang Zhejiang 312500 (CN)
(74) Representative: Cabinet Beau de Loménie
(86) International application number: PCT/CN2015/097078
(87) International publication number: WO 2016/091204

(56) References cited:
- EP-A2- 1 574 762
- CN-A- 103 671 969
- CN-U- 201 553 484
- CN-U- 201 660 307
- CN-U- 204 297 690
- DE-U1-202013 104 058
- FR-B1- 2 585 800
- JP-A- 2003 247 658
- JP-A- 2010 126 196
- JP-A- 2011 027 220
- KR-B1- 101 172 318

## Description

### Technical Field

The invention relates to the field of powder conveying, in particular to a method of using sterile powder conveying device composed of multiple butterfly valves.

### Background Art

At present, it needs to convey materials from a sterile space to another and maintain sterile state of the materials in the conveying process in a non-sterile production environment during product production in industries of pharmaceutical, biology and food. Technical difficulty is huge in the event of sterile transfer of a great number (>10kg) of sterile powder materials in a non-sterile environment.

Powder residue will be left on the inner surface of a butterfly valve, including a valve clack and a seal ring, after powder conveying. The powder residue will disable sealing of the butterfly valve to contaminate the sterile materials due to exposure to a non-sterile environment around. Meanwhile, the powder will leak into the environment, and especially some sensitive materials may have negative influence on the environment and operating personnel. In addition, a cleaning medium will leak into the materials during online cleaning to contaminate the materials needing to be transferred and sterility of receiving containers.

The technology widely used in the world is split butterfly valve technology, but it has some defects: a) powder residue will be left on the inner surface of the butterfly valve after powder conveying to damage sealability of the butterfly valve and sterility of products; b) the powder residue causes wear of a sealing gasket of the butterfly valve to leak fine particles, which entails frequent replacement of the sealing gasket; c) online cleaning and online sterilizing between two split valve clacks are impossible due to unreliable sealing; d) VHP disinfection technology fails to strictly guarantee sterility; e) leakage is possible during VHP disinfection, bringing high risk to health of production personnel. The sterility guarantee of the technology is insufficient as sealability cannot be guaranteed. Document EP 1574762 discloses an example of known butterfly valve.

The document JP2010126196A discloses a method of using a sterile powder conveying device, wherein the sterile powder conveying device a butterfly valve an upstream sterile equipment, a downstream sterile receiving container and an upstream butterfly valve,wherein the butterfly valve comprises a valve body and a valve clack positioned in the valve body, at least one sprayer for purging the inner surface of the butterfly valve mounted on the valve body, a water drainage groove which is arranged horizontally is formed in the middle of the valve clack, one end of the water drainage groove being closed while the other end of the same is open to form a water outgoing end, at least one water drainage hole communicating with the water drainage groove is formed in the valve clack, the sprays being positioned above the water drainage groove,the method including following steps:
- connecting a discharging port of the upstream sterile equipment with the upstream butterfly valve, connecting the upstream butterfly valve with the butterfly valve by adopting a clamp;
- connecting a feeding port of the downstream sterile receiving container with the lower end of the butterfly valve;
- cleaning, sterilizing and drying.

### Summary of the Invention

The invention aims to overcome the defects in the prior art and provides a method as defined in claim 1.

The butterfly valve as used in the claimed method comprises a valve body and a valve clack positioned in the valve body. The butterfly valve is characterized in that at least one sprayer for purging the inner surface of the butterfly valve is mounted on the valve body and connected with an inlet valve positioned outside the valve body; a water drainage groove which is arranged horizontally is formed in the middle of the valve clack, one end of the water drainage groove is closed while the other end of the same is open to form a water outgoing end, and at least one water drainage hole communicated with the water drainage groove is formed in the valve clack; the sprays are positioned above the water drainage groove.

Preferably, the upper surface of the valve clack is a concave cambered surface, which is conducive to water accumulation, and the water drainage hole is formed in the bottom of the concave cambered surface.

After powder conveying is completed, sterile gas at appropriate pressure can be fed to purge the inner surface of the butterfly valve to remove the powder residue so as to guarantee complete sealing between the butterfly valve clack and a sealing gasket. The butterfly valve can be manual or automatic, and used butterfly valves are all sanitary stainless steel butterfly valves.

The sterile powder conveying device used in the claimed method is composed of multiple butterfly valves. The sterile powder conveying device is capable of online cleaning, sterilizing and drying the butterfly valve and purging the powder residue in the butterfly valve to guarantee sterility of materials during conveying.

The sterile powder conveying device comprises a butterfly valve component formed by serially connecting multiple butterfly valves, wherein the water outgoing end of the water drainage groove of the butterfly valve at the lowest end of the butterfly valve component is connected with a water drainage valve positioned outside the butterfly valve; the sterile powder conveying device further comprises upstream sterile equipment and a downstream sterile receiving container, between which is the butterfly valve component, the lower end of the butterfly valve at the lowest end of the butterfly valve component is connected with a feeding port of the downstream sterile receiving container, and a discharging port of the upstream sterile equipment is connected with an upstream butterfly valve which is connected with the butterfly valve at the uppermost end of the butterfly valve component.

As the butterfly valve can be completely sealed, corresponding media can be fed for online cleaning, sterilizing and drying of a non-sterile area of the butterfly valve component to realize repeated sterile docking without affecting the sterility of materials needing to be conveyed and the inside of the downstream sterile receiving container.

Moreover, a respirator is mounted on the downstream sterile receiving container, and a respirator valve for controlling the respirator is arranged between the downstream sterile receiving container and the respirator.

Preferably, the adjacent butterfly valves are connected by flanges, welding or quick-connection clamps, which are selected in light of practical situation.

Preferably, each sprayer is a 360-degree spraying ball or nozzle, which can realize 360-degree comprehensive spraying. The sprayers can be fixed or rotary, which is selected on the basis of practical situation. The mounting positions of the sprayers on the butterfly valve can be changed according to actual needs.

The claimed method includes following steps:
a. connecting the discharging port of the upstream sterile equipment with the upstream butterfly valve, connecting the upstream butterfly valve with the first butterfly valve by adopting a flange or a clamp, and then online cleaning, sterilizing and drying together;
b. connecting the feeding port of the downstream sterile receiving container with the third butterfly valve and the second butterfly valve, connecting the third butterfly valve and the second butterfly valve in series, and then online cleaning, sterilizing and drying together;
c. moving the downstream sterile receiving container to below the upstream sterile equipment, lifting the downstream sterile receiving container through lifting equipment and accurately docking the same onto the first butterfly valve, and hermetically connecting the first butterfly valve with the second butterfly valve through a clamp to complete connection of the sterile conveying device
d. opening the second butterfly valve and the water drainage valve, opening the inlet valves, feeding cleaning liquid into a non-sterile area between the first butterfly valve and the third butterfly valve through the sprayers of the second butterfly valve and the third butterfly valve for online cleaning, then feeding clean steam for online sterilizing, finally feeding sterile gas for online drying, and closing all valves after operation is finished;
e. after cleaning, sterilizing and drying operations are completed in the step d, opening all butterfly valves, and opening the respirator valve of the downstream sterile receiving container at the same time to convey sterile powder from the upstream sterile equipment into the downstream sterile receiving container; selecting appropriate size of the butterfly valves in light of flowability of product powder;
f. after conveying of the powder is finished, closing the upstream butterfly valve, opening the inlet valves, feeding sterile gas through the sprayers of the first butterfly valve, the second butterfly valve and the third butterfly valve to purge the inner surface of the butterfly valves to remove residual powder, wherein the sterile gas should pass through a sterile filtration system before entering the butterfly valves;
g. after purging is completed, closing the first butterfly valve, the second butterfly valve and the third butterfly valve, feeding sterile gas from the respirator of the downstream sterile receiving container for blowback of a filter element of the respirator, and pressurizing the downstream sterile receiving container at the same time to keep positive pressure in the same, wherein the sterile gas should pass through the sterile filtration system before entering the butterfly valves;
h. closing the respirator valve, and opening the clamp to remove the downstream sterile receiving container to finish the whole sterile powder conveying operation.

Preferably, mode and duration of purging in the step f is determined through verification according to flowability of products, and intermittent pulsating purging or sectional purging is adopted.

Preferably, the sterile gas is compressed air or inert gas, which is selected according to product properties.

The method has the advantages that: 1) sealability is high due to adopting of the complete butterfly valve; 2) powder residue on the inner surface of the butterfly valve can be purged after the sterile powder conveying device to guarantee sealability of the butterfly valve; 3) online cleaning, sterilizing and drying of non-sterile areas among the butterfly valves can be realized, so that sterility guarantee is reliable; 4) repeated sterile conveying can be realized by conducting online cleaning, sterilizing and drying once, so that efficiency is high.

### Description of Drawings

Figure 1 is a structure diagram of the butterfly valve.
Figure 2 is top view of Figure 1.
Figure 3 is A-A section view of Figure 1.
Figure 4 is a structure diagram of the butterfly valve clack.
Figure 5 is top view of Figure 4.
Figure 6 is a structure diagram of the sterile powder conveying device.

In the figures, 1-valve body, 2-valve clack, 3-sprayer, 4-inlet valve, 100-butterfly valve component, 101-first butterfly valve, 102-second butterfly valve, 103-third butterfly valve, 104-sprayer of first butterfly valve, 105-sprayer of second butterfly valve, 106-sprayer of third butterfly valve, 107, 108 and 109-inlet valve, 110-water drainage valve, 111-water drainage groove, 112-water drainage hole, 200-upstream sterile equipment, 201-upstream butterfly valve, 300-downstream sterile receiving container, 301-respirator valve, 302-respirator.

### Embodiments

The butterfly valve is further described below with embodiments.

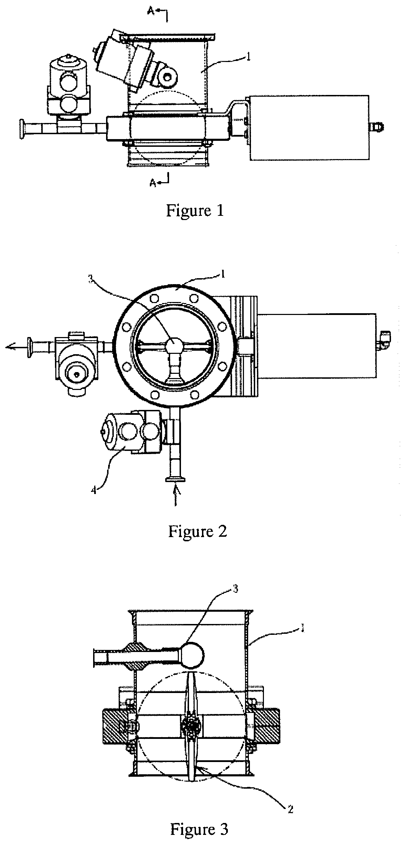

As for the butterfly valve shown in Figures 1-5, a fixed 360-degree sprayer 3 for purging the inner surface of the butterfly valve is mounted on a valve body 1 and connected with an inlet valve 4 positioned outside the valve body. An elongated water drainage groove 111 which is arranged horizontally is formed in the middle of a valve clack 2, and one end of the water drainage groove 111 is closed while the other end of the same is open to form a water outgoing end. The upper surface of the valve clack is a concave cambered surface, which is conducive to water accumulation, and four water drainage holes 112 communicated with the drainage groove 111 are formed in the bottom of the concave cambered surface; the spray 3 is positioned above the water drainage groove 111.

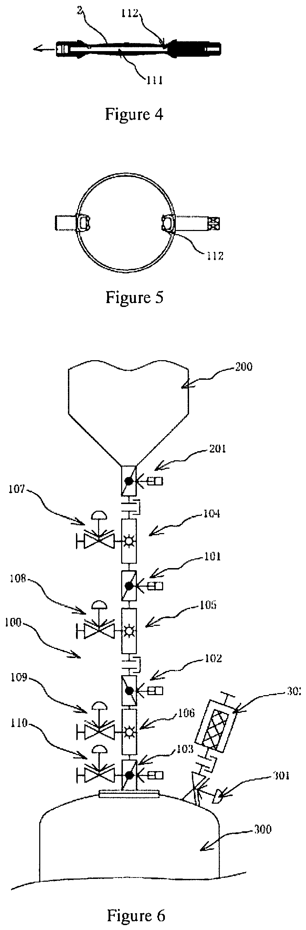

The sterile powder conveying device shown in Figure 6 is composed of a butterfly valve component 100, upstream sterile equipment 200 and a downstream sterile receiving container 300. The butterfly valve component 100 is positioned between the upstream sterile equipment 200 and the downstream sterile receiving container 300. The lower end of the butterfly valve at the lowest end of the butterfly valve component is connected with a feeding port of the downstream sterile receiving container 300, and a discharging port of the upstream sterile equipment 200 is connected with an upstream butterfly valve 201 which is connected with the butterfly valve at the uppermost end of the butterfly valve component. The butterfly valve component 100 is formed by serially connecting a first butterfly valve 101, a second butterfly valve 102 and a third butterfly valve 103 from top to bottom. The water outgoing end of the water drainage groove of the third butterfly valve positioned at the lowest end of the butterfly valve component is connected with a water drainage valve 110 positioned outside the butterfly valve, and a water outlet of the water drainage valve is connected with a water drainage and repelling valve group. A respirator 302 is mounted on the downstream sterile receiving container 300, and a respirator valve 301 for controlling the respirator is arranged between the downstream sterile receiving container 300 and the respirator 301.

The method of using the sterile powder conveying device is as follows:
a. connecting the discharging port of the upstream sterile equipment 200 with the upstream butterfly valve 201, connecting the upstream butterfly valve 201 with the first butterfly valve 101 by adopting a flange or a clamp, and then online cleaning, sterilizing and drying together;
b. connecting the feeding port of the downstream sterile receiving container 300 with the third butterfly valve 103 and the second butterfly valve 102, connecting the third butterfly valve 103 and the second butterfly valve 102 in series, and then online cleaning, sterilizing and drying together;
c. moving the downstream sterile receiving container 300 to below the upstream sterile equipment 200, lifting the downstream sterile receiving container 300 through lifting equipment and accurately docking the same onto the first butterfly valve 101, and hermetically connecting the first butterfly valve 101 with the second butterfly valve 102 through a clamp to complete connection of the sterile conveying device
d. opening the second butterfly valve 102 and the water drainage valve 110, opening the inlet valves 108 and 109, feeding cleaning liquid into a non-sterile area between the first butterfly valve 101 and the third butterfly valve 103 through the sprayers 105 and 106 of the second butterfly valve and the third butterfly valve for online cleaning, then feeding clean steam for online sterilizing, finally feeding sterile gas for online drying, and closing all valves after operation is finished;
e. after cleaning, sterilizing and drying operations are completed in the step d, opening all butterfly valves, and opening the respirator valve 301 of the downstream sterile receiving container at the same time to convey sterile powder from the upstream sterile equipment into the downstream sterile receiving container; selecting appropriate size of the butterfly valves in light of flowability of product powder;
f. after conveying of the powder is finished, closing the upstream butterfly valve 201, opening the inlet valves 107, 108 and 109, feeding sterile gas through the sprayers 104, 105 and 106 of the first butterfly valve, the second butterfly valve and the third butterfly valve to purge the inner surface of the butterfly valves to remove residual powder, wherein the sterile gas should pass through a sterile filtration system before entering the butterfly valves;
g. after purging is completed, closing the first butterfly valve, the second butterfly valve and the third butterfly valve, feeding sterile gas from the respirator 302 of the downstream sterile receiving container 300 for blowback of a filter element of the respirator, and pressurizing the downstream sterile receiving container 300 at the same time to keep positive pressure in the same, wherein the sterile gas should pass through the sterile filtration system before entering the butterfly valves;
h. closing the respirator valve 301, and opening the clamp to remove the downstream sterile receiving container 300 to finish the whole sterile powder conveying operation.

Only good embodiments of the invention are described above, but it cannot be interpreted as restriction for the claims. The invention is not limited to the above embodiments, and its specific structure can change. Any changes within the scope of protection of the appended claims are within the scope of protection of the invention.

## Claims

1. A method of using a sterile powder conveying device, wherein the sterile powder conveying device comprises a butterfly valve component (100) formed by serially connecting a first butterfly valve (101), a second butterfly valve (102) and a third butterfly valve (103) arranged from top to bottom, an upstream sterile equipment (200), a downstream sterile receiving container (300) and an upstream butterfly valve (201),
wherein a respirator (302) is mounted on the downstream sterile receiving container (300), and a respirator valve (301) for controlling the respirator is arranged between the downstream sterile receiving container (300) and the respirator (302),
wherein the first butterfly valve (101) comprises a valve body (1) and a valve clack (2) positioned in the valve body, at least one sprayer (104) for purging the inner surface of the butterfly valve mounted on the valve body and connected with an inlet valve (107) positioned outside the valve body, a water drainage groove (11) which is arranged horizontally is formed in the middle of the valve clack, one end of the water drainage groove being closed while the other end of the same is open to form a water outgoing end, at least one water drainage hole (112) communicating with the water drainage groove is formed in the valve clack, the sprays being positioned above the water drainage groove,
wherein the second butterfly valve (102) comprises a valve body (1) and a valve clack (2) positioned in the valve body, at least one sprayer (105) for purging the inner surface of the butterfly valve mounted on the valve body and connected with an inlet valve (108) positioned outside the valve body, a water drainage groove (111) which is arranged horizontally is formed in the middle of the valve clack, one end of the water drainage groove being closed while the other end of the same is open to form a water outgoing end, at least one water drainage hole (112) communicating with the water drainage groove is formed in the valve clack, the sprays being positioned above the water drainage groove,
wherein the third butterfly valve (103) comprises a valve body (1) and a valve clack (2) positioned in the valve body, at least one sprayer (106) for purging the inner surface of the butterfly valve mounted on the valve body and connected with an inlet valve (109) positioned outside the valve body, a water drainage groove (111) which is arranged horizontally is formed in the middle of the valve clack, one end of the water drainage groove being closed while the other end of the same is open to form a water outgoing end connected to a water drainage valve (110) positioned outside of the butterfly valve, at least one water drainage hole (112) communicating with the water drainage groove is formed in the valve clack,
the sprays being positioned above the water drainage groove,
the using method including following steps:
a. connecting a discharging port of the upstream sterile equipment (200) with the upstream butterfly valve (201), connecting the upstream butterfly valve (201) with the first butterfly valve (101) at the uppermost end of the butterfly valve component by adopting a flange or a clamp, and then online cleaning, sterilizing and drying together;
b. connecting a feeding port of the downstream sterile receiving container (300) with the lower end of the third butterfly valve (103) at the lowest end of the butterfly valve component, and then online cleaning, sterilizing and drying together;
c. moving the downstream sterile receiving container (300) to below the upstream sterile equipment (200), lifting the downstream sterile receiving container (300) through lifting equipment and accurately docking the same onto the first butterfly valve (101), and hermetically connecting the first butterfly valve (101) with the second butterfly valve (102) through a clamp to complete connection of the sterile conveying device;
d. opening the second butterfly valve (102) and the water drainage valve (110), opening the inlet valves (108, 109), feeding cleaning liquid into a non-sterile area between the first butterfly valve (101) and the third butterfly valve (103) through the sprayers (105, 106) of the second butterfly valve and the third butterfly valve for online cleaning, then feeding clean steam for online sterilizing, finally feeding sterile gas for online drying, and closing all valves after operation is finished;
e. after cleaning, sterilizing and drying operations are completed in the step d, opening all butterfly valves, and opening the respirator valve (301) of the downstream sterile receiving container at the same time to convey sterile powder from the upstream sterile equipment into the downstream sterile receiving container; selecting appropriate size of the butterfly valves in light of flowability of product powder;
f. after conveying of the powder is finished, closing the upstream butterfly valve (201), opening the inlet valves (107, 108, 109), feeding sterile gas through the sprayers (104, 105, 106) of the first butterfly valve, the second butterfly valve and the third butterfly valve to purge the inner surface of the butterfly valves to remove residual powder, wherein the sterile gas should pass through a sterile filtration system before entering the butterfly valves;
g. after purging is completed, closing the first butterfly valve, the second butterfly valve and the third butterfly valve, feeding sterile gas from the respirator (302) of the downstream sterile receiving container (300) for blowback of a filter element of the respirator, and pressurizing the downstream sterile receiving container (300) at the same time to keep positive pressure in the same, wherein the sterile gas should pass through the sterile filtration system before entering the butterfly valves;
h. closing the respirator valve (301), and opening the clamp to remove the downstream sterile receiving container (300) to finish the whole sterile powder conveying operation.

2. A method according to claim 1 is **characterized in that** mode and duration of purging in the step f is determined through verification according to flowability of a product, and intermittent pulsating purging or sectional purging is adopted.

3. A method according to claim 1 is **characterized in that** the sterile gas is compressed air or inert gas, which is selected according to product properties.

4. A method according to claim 1, wherein the upper surface of the valve clack (2) of the first butterfly valve (101), the second butterfly valve (102) and the third butterfly valve (103) is a concave cambered surface, and the water drainage holes (112) are formed at the bottom of the concave cambered surface.

5. A method according to claim 1, wherein each sprayer (104, 105, 106) is a 360-degree spraying ball or nozzle.

## Patentansprüche

1. Verfahren zur Verwendung einer Sterilpulverfördervorrichtung, **dadurch gekennzeichnet, dass** die Sterilpulverfördervorrichtung eine Drosselventilkomponente (100), die durch serielles Verbinden eines ersten Drosselventils (101), eines zweiten Drosselventils (102) und eines dritten Drosselventils (103), die von oben nach unten angeordnet sind, ausgebildet ist, eine stromaufwärtige Sterilausrüstung (200), einen stromabwärtigen Sterilaufnahmebehälter (300) und ein stromaufwärtiges Drosselventil (201) umfasst,
wobei ein Beatmungsgerät (302) an dem stromabwärtigen Sterilaufnahmebehälter (300) installiert ist, wobei ein Beatmungsgerätventil (301) zur Steuerung des Beatmungsgerätes zwischen dem stromabwärtigen Sterilaufnahmebehälter (300) und dem Beatmungsgerät (302) angeordnet ist,
wobei das erste Drosselventil (101) einen Ventilkörper (1) und eine in dem Ventilkörper angeordnete Ventilklaue (2) umfasst, wobei mindestens ein Sprüher (104) zum Spülen der Innenfläche des Drosselventils an dem Ventilkörper installiert und mit einem außerhalb des Ventilkörpers angeordneten Einlassventil (107) verbunden ist, eine horizontal angeordnete Wasserablaufrille (111) in der Mitte der Ventilklaue ausgebildet ist, wobei ein Ende der Wasserablaufrille geschlossen ist, während das andere Ende derselben offen ist, um ein Wasseraustrittsende zu bilden, mindestens ein Wasserablaufloch (112), das mit der Wasserablaufrille in Verbindung steht, in der Ventilklaue ausgebildet ist, wobei die Sprühdüsen oberhalb der Wasserablaufrille angeordnet sind,
wobei das zweite Drosselventil (102) einen Ventilkörper (1) und eine in dem Ventilkörper angeordnete Ventilklaue (2) umfasst, wobei mindestens ein Sprüher (105) zum Spülen der Innenfläche des Drosselventils an dem Ventilkörper installiert und mit einem außerhalb des Ventilkörpers angeordneten Einlassventil (108) verbunden ist, eine horizontal angeordnete Wasserablaufrille (111) in der Mitte der Ventilklaue ausgebildet ist, wobei ein Ende der Wasserablaufrille geschlossen ist, während das andere Ende derselben offen ist, um ein Wasseraustrittsende zu bilden, mindestens ein Wasserablaufloch (112), das mit der Wasserablaufrille in Verbindung steht, in der Ventilklaue ausgebildet ist, wobei die Sprühdüsen oberhalb der Wasserablaufrille angeordnet sind,
wobei das dritte Drosselventil (103) einen Ventilkörper (1) und eine in dem Ventilkörper angeordnete Ventilklaue (2) umfasst, wobei mindestens ein Sprüher (106) zum Spülen der Innenfläche des Drosselventils an dem Ventilkörper installiert und mit einem außerhalb des Ventilkörpers angeordneten Einlassventil (109) verbunden ist, eine horizontal angeordnete Wasserablaufrille (111) in der Mitte der Ventilklaue ausgebildet ist, wobei ein Ende der Wasserablaufrille geschlossen ist, während das andere Ende derselben offen ist, um ein Wasseraustrittsende zu bilden, das mit einem Wasserablaufventil verbunden ist, das außerhalb des Drosselventils angeordnet ist, mindestens ein Wasserablaufloch (112), das mit der Wasserablaufrille in Verbindung steht, in der Ventilklaue ausgebildet ist, wobei die Sprühdüsen oberhalb der Wasserablaufrille angeordnet sind,
das Verfahren umfasst folgende Schritte:
a. Verbinden eines Auslassanschlusses der stromaufwärtigen Sterilausrüstung (200) mit dem stromaufwärtigen Drosselventil (201), Verbinden des stromaufwärtigen Drosselventils (201) mit dem ersten Drosselventil (101) an dem obersten Ende der Drosselventilkomponente durch Annehmen eines Flansches oder einer Klemme und dann gemeinsames Online-Reinigen, Sterilisieren und Trocknen;
b. Verbinden eines Zufuhranschlusses des stromabwärtigen Sterilaufnahmebehälters (300) mit dem unteren Ende des dritten Drosselventils (103), Verbinden des dritten Drosselventils (103) mit dem untersten Ende der Drosselventilkomponente und dann gemeinsames Online-Reinigen, Sterilisieren und Trocknen;
c. Bewegen des stromabwärtigen Sterilaufnahmebehälters (300) unter die stromaufwärtige Sterilausrüstung (200), Anheben des stromabwärtigen Sterilaufnahmebehälters (300) durch eine Hebevorrichtung und genaues Andocken desselben an das erste Drosselventil (101), und hermetisches Verbinden des ersten Drosselventils (101) mit dem zweiten Drosselventil (102) durch eine Klemme, um die Verbindung der Sterilfördervorrichtung zu vervollständigen;
d. Öffnen des zweiten Drosselventils (102) und des Wasserablaufventils (110), Öffnen der Einlassventile (108, 109), Zuführen von Reinigungsflüssigkeit in einen unsterilen Bereich zwischen dem ersten Drosselventil (101) und dem dritten Drosselventil (103) durch die Sprüher (105, 106) des zweiten Drosselventils und des dritten Drosselventils für das Online-Reinigen, dann Zuführen von sauberem Dampf für das Online-Sterilisieren, schließlich Zuführen von Sterilgas für das Online-Trocknen, und Schließen aller Ventile nach Beendigung des Vorgangs;
e. Nach Beendigung der Reinigungs-, Sterilisations- und Trocknungsvorgänge im Schritt d, Öffnen aller Drosselventile und gleichzeitiges Öffnen des Beatmungsgerätventils (301) des stromabwärtigen Sterilaufnahmebehälters, um Sterilpulver von der stromaufwärtigen Sterilausrüstung in den stromabwärtigen Sterilaufnahmebehälter zu befördern; Auswählen einer geeigneten Größe der Drosselventile im Hinblick auf die Fließfähigkeit des Produktpulvers;
f. Nach Beendigung der Förderung des Pulvers, Schließen des stromaufwärtigen Drosselventils (201), Öffnen der Einlassventile (107, 108, 109), Zuführen von Sterilgas durch die Sprüher (104, 105, 106) des ersten Drosselventils, des zweiten Drosselventils und des dritten Drosselventils, um die Innenfläche der Drosselventile zu spülen, um restliches Pulver zu entfernen, wobei das Sterilgas vor dem Eintritt in die Drosselventile durch ein Sterilfiltrationssystem strömen sollte;
g. Nach Beendigung der Spülung, Schließen des ersten Drosselventils, des zweiten Drosselventils und des dritten Drosselventils, Zuführen von Sterilgas aus dem Beatmungsgerät (302) des stromabwärtigen Sterilaufnahmebehälters (300) zum Rückblasen eines Filterelements des Beatmungsgeräts und gleichzeitiges Unterdrucksetzen des stromabwärtigen Sterilaufnahmebehälters (300), um in diesem einen Überdruck aufrechtzuerhalten, wobei das Sterilgas vor dem Eintritt in die Drosselventile durch das Sterilfiltrationssystem strömen sollte;
h. Schließen des Beatmungsgerätventils (301) und Öffnen der Klemme zur Entnahme des stromabwärtigen Sterilaufnahmebehälters (300), um den gesamten Vorgang der Sterilpulverförderung zu beenden.

2. Verfahren nach Anspruch 1, **dadurch gekennzeichnet, dass** der Modus und die Dauer der Spülung im Schritt f durch Überprüfung in Abhängigkeit von der Fließfähigkeit eines Produkts bestimmt werden und eine intermittierende pulsierende Spülung oder eine abschnittsweise Spülung angewendet wird.

3. Verfahren nach Anspruch 1, **dadurch gekennzeichnet, dass** das Sterilgas Druckluft oder Inertgas ist, das entsprechend den Produkteigenschaften ausgewählt wird.

4. Verfahren nach Anspruch 1, **dadurch gekennzeichnet, dass** die obere Fläche der Ventilklaue (2) des ersten Drosselventils (101), des zweiten Drosselventils (102) und des dritten Drosselventils (103) eine konkav gewölbte Fläche ist, und dass die Wasserablauflöcher (112) am Boden der konkav gewölbten Fläche ausgebildet sind.

5. Verfahren nach Anspruch 1, **dadurch gekennzeichnet, dass** jeder Sprüher (104, 105, 106) eine 360-Grad-Sprühkugel oder -Düse ist.

## Revendications

1. Procédé d'utilisation d'un dispositif de transfert de poudre stérile, **caractérisé en ce que**, le dispositif de transfert de poudre stérile comprend un ensemble de vanne papillon (100), qui est composé d'une première vanne papillon (101), d'une deuxième vanne papillon (102) et une troisième vanne papillon (103) en série agencées de haut en bas, un équipement stérile en amont (200), un récipient de réception stérile en aval (300) et une vanne papillon en amont (201),
dans lequel, un respirateur (302) est prévu sur le récipient de réception stérile en aval (300), et une vanne de respirateur (301) pour commander le respirateur est prévue entre le récipient de réception stérile en aval (300) et le respirateur (302),
dans lequel, la première vanne papillon (101) comprend un corps de vanne (1) et un clapet de vanne (2) dans le corps de vanne, au moins un pulvérisateur (104) qui est utilisé pour purger la surface intérieure de la vanne papillon montée dans le corps de vanne et est connecté à une vanne d'admission (107) disposée à l'extérieur du corps de vanne, une rainure de drainage d'eau (111) est formée dans la direction horizontale au milieu du clapet de vanne, une extrémité de la rainure de drainage d'eau est fermée tandis qu'une autre extrémité du celle-ci est ouverte pour former une extrémité de sortie d'eau, au moins un trou de drainage d'eau (112) en communication avec la rainure de drainage d'eau est formé au clapet de vanne, et le pulvérisateur est disposé au-dessus de la rainure de drainage d'eau,
dans lequel, la deuxième vanne papillon (102) comprend un corps de vanne (1) et un clapet de vanne (2) dans le corps de vanne, au moins un pulvérisateur (105) qui est utilisé pour purger la surface intérieure de la vanne papillon montée dans le corps de vanne et est connecté à une vanne d'admission (108) disposée à l'extérieur du corps de vanne, une rainure de drainage d'eau (111) est formée dans la direction horizontale au milieu du clapet de vanne, une extrémité de la rainure de drainage d'eau est fermée tandis qu'une autre extrémité du celle-ci est ouverte pour former une extrémité de sortie d'eau, au moins un trou de drainage d'eau (112) en communication avec la rainure de drainage d'eau est formé au clapet de vanne, et le pulvérisateur est disposé au-dessus de la rainure de drainage d'eau,
dans lequel, la troisième vanne papillon (103) comprend un corps de vanne (1) et un clapet de vanne (2) dans le corps de vanne, au moins un pulvérisateur (106) qui est utilisé pour purger la surface intérieure de la vanne papillon montée dans le corps de vanne et est connecté à une vanne d'admission (109) disposée à l'extérieur du corps de vanne, une rainure de drainage d'eau (111) est prévue dans la direction horizontale au milieu du clapet de vanne, une extrémité de la rainure de drainage d'eau est fermée tandis qu'une autre extrémité du celle-ci est ouverte pour former une extrémité de sortie d'eau connectée à une vanne de vidange d'eau à l'extérieur de la vanne papillon, au moins un trou de drainage d'eau (112) en communication avec la rainure de drainage d'eau est formé au clapet de vanne, et le pulvérisateur est disposé au-dessus de la rainure de drainage d'eau, ledit procédé comprend les étapes suivantes :
a. connecter un orifice de décharge de l'équipement stérile en amont (200) à la vanne papillon en amont (201), connecter la vanne papillon en amont (201) à la première vanne papillon (101) au niveau de l'extrémité la plus haute de l'ensemble de vanne papillon par l'intermédiaire d'une bride ou d'une pince, puis nettoyer, stériliser et sécher l'ensemble en ligne ;
b. connecter un orifice de charge du récipient de réception stérile en aval (300) à l'extrémité inférieure de la troisième vanne papillon (103) au niveau de l'extrémité la plus basse de l'ensemble de vanne papillon, et connecter à la troisième vanne papillon (103) au niveau de l'extrémité la plus basse de l'ensemble de vanne papillon, puis nettoyer, stériliser et sécher l'ensemble en ligne ;
c. déplacer le récipient de réception stérile en aval (300) jusqu'en dessous de l'équipement stérile en amont (200), soulever le récipient de réception stérile en aval (300) en utilisant un équipement de levage et connecter avec précision à la première vanne papillon (101), et connecter de manière étanche la première vanne papillon (101) à la deuxième vanne papillon (102) par l'intermédiaire d'une pince pour compléter la connexion du dispositif de transfert de stérile ;
d. ouvrir la deuxième vanne papillon (102) et la vanne de vidange d'eau (110), ouvrir les vannes d'admission (108, 109), introduire un liquide de nettoyage dans une zone non stérile entre la première vanne papillon (101) et la troisième vanne papillon (103) par l'intermédiaire des pulvérisateurs (105, 106) de la deuxième vanne papillon et de la troisième vanne papillon pour effectuer un nettoyage en ligne, puis introduire une vapeur de nettoyage pour effectuer une stérilisation en ligne, enfin introduire un gaz stérile pour effectuer un séchage en ligne, et fermer toutes les vannes à la fin des opérations ;
e. une fois les opérations de nettoyage, de stérilisation et de séchage à l'étape d complétées, ouvrir toutes les vannes papillon et ouvrir la vanne de respirateur (301) du récipient de réception stérile en aval en même temps, et transférer une poudre stérile de l'équipement stérile en amont vers le récipient de réception stérile en aval ; les dimensions des vannes papillon étant choisies en fonction de la fluidité de la poudre ;
f. une fois le transfert de la poudre complété, fermer la vanne papillon en amont (201), ouvrir les vannes d'admission (107, 108, 109), introduire le gaz stérile par l'intermédiaire des pulvérisateurs (104, 105, 106) de la première vanne papillon, de la deuxième vanne papillon et de la troisième vanne papillon et purger la surface intérieure des vannes papillon, de sorte d'éliminer la poudre résiduelle ; le gaz stérile devant passer à travers un système de filtration stérile avant d'entrer dans les vannes papillon ;
g. une fois la purge complétée, fermer la première vanne papillon, la deuxième vanne papillon et la troisième vanne papillon, introduire le gaz stérile du respirateur (302) du récipient de réception stérile en aval (300) et contre-purger une cartouche du respirateur, et pressuriser le récipient de réception stérile en aval (300) en même temps pour maintenir une pression positive à l'intérieur ; le gaz stérile devant passer à travers le système de filtration stérile avant d'entrer dans les vannes papillon ;
f. fermer la valve du respirateur (301), libérer la pince, et démonter le récipient de réception stérile en aval (300) pour compléter l'ensemble de l'opération de transfert de la poudre stérile.

2. Procédé selon la revendication 1, **caractérisé en ce que**, le mode et la durée de la purge à l'étape f sont déterminés par validation en fonction de la fluidité d'un produit, et une purge pulsée intermittente ou une purge sectionnelle est utilisée.

3. Procédé selon la revendication 1, **caractérisé en ce que** le gaz stérile est de l'air comprimé ou un gaz inerte, qui est choisi en fonction des propriétés d'un produit.

4. Procédé selon la revendication 1, **caractérisé en ce que** le clapet (2) de chacune de la première vanne papillon (101), de la deuxième vanne papillon (102) et de la troisième vanne papillon (103) présente une surface supérieure bombée concave, et le trou de drainage d'eau (112) est formé au niveau le plus bas de la surface bombée concave.

5. Procédé selon la revendication 1, **caractérisé en ce que** chaque pulvérisateur (104, 105, 106) est une boule ou buse de pulvérisation à 360 degrés.
